# EUROPEAN PATENT SPECIFICATION

(11) **EP 1 944 973 B1**
(45) Date of publication and mention of the grant of the patent: **12.10.2011**
(21) Application number: 07121252.6
(22) Date of filing: 21.11.2007
(51) Int. Cl.: H04N 7/24, H04N 5/00

(54) **A digital television receiver and method for processing the digital television signal**
Digitaler Fernsehempfänger und Verfahren zur Verarbeitung des digitalen Fernsehsignals
Récepteur de télévision numérique et procédé de traitement du signal de télévision numérique

(30) Priority: 22.11.2006 KR 20060115947
(43) Date of publication of application: 16.07.2008
(73) Proprietor: LG Electronics Inc., Seoul, 150-721 (KR)
(72) Inventor: Hong, Ho Taek, Seoul 137-724 (KR); Suh, Jong Yeul, Seoul 137-724 (KR); Lee, Yoon Ei, Seoul 137-724 (KR); Lee, Joon Hui, Seoul 137-724 (KR); Kim, Jin Pil, Seoul 137-724 (KR)
(74) Representative: Cabinet Plasseraud

(56) References cited:
- EP-A- 0 805 590
- EP-A- 1 241 878
- EP-A1- 1 014 711
- WO-A-00/33576
- US-A1- 2002 166 128
- US-A1- 2005 257 130
- US-B1- 6 957 445
- "DIGITAL VIDEO BROADCASTING (DVB); SPECIFICATION FOR SERVICE INFORMATION (SI) IN DVB SYSTEMS" ETSI STANDARDS, LIS, SOPHIA ANTIPOLIS CEDEX, FRANCE, no. V1.6.01, 1 June 2004 (2004-06-01), pages 1-95, XP001202455 ISSN: 0000-0001

## Description

### BACKGROUND

### Field of the disclosure

The present disclosure relates to digital broadcasting, and more particularly, to digital television (DTV) receivers and methods for the DTV signal.

### BACKGROUND

Generally, in an analog-based television according to a related art, a viewer selects a specific one of a plurality of medium including terrestrial, cable, satellite and the like. And, a broadcasting service is carried out in a manner that a corresponding television signal is provided via the selected medium on a channel selected by a user from a plurality of channels such as channel 7, channel 9, channel 11, and the like.

As the digital television (DTV) technology has been developed to initiate the corresponding services, various kinds of information including a channel guide, channel information and the like can be provided to a viewer as well as audio/video information used to be provided by the related art analog-based television.

In order to provide the various kinds of information in digital broadcasting, side information in a table format defined by program specific information (PSI), program and system information protocol (PSIP), digital video broadcasting-service information (DVB-SI) or the like is included in a DTV signal as well as audio and video streams and is then transmitted/received.

In this case, the table-formatted side information included in the DTV signal guide a packet identifier (PID) for carrying the audio/video (A/V) streams and provide various kinds of information including a per-channel service name, a number of channels, a broadcast language, a caption, and the like.

Yet, the side information provided in the related art digital broadcasting environment just include information on a single broadcast channel and information on events broadcasted on the single channel only but fail to include information on associated channels or events.

For instance, in case that a broadcast of a corresponding event is interrupted due to expiration of time assigned to a currently broadcasted event or the like, information indicating whether there exists a channel for continuing to broadcast the event is not included. In case that several associated games such as World-Cup soccer games are in progress, information indicating which channel broadcasts each of the games or when each of the games will be broadcasted on a corresponding channel is not included. In case that the same contents are broadcasted by a pay-per-view (PPV) service or the like in different times, information indicating which channels broadcast the contents is not included. In case that contents of video on demand (VoD) service end, information indicating an auto-switching channel is not included. In case that a serial is provided by VoD service, information indicating what is a next broadcast channel or whether there is a same channel as retransmitted via another media is not included.

Since information on each of the above-illustrated cases is not included in a television signal, a user has to make a search in direct.

In particular, information on an event associated with a specific event or information on a channel associated with the channel currently tuned is not included in side information of digital broadcasting, let alone the related art analog broadcasting. So, a presence or non-presence of this information is unknown. Even if there exists the information, it is still inconvenient for a user to switch to a corresponding event or channel. EP 0 805 590 discloses a method of transmitting broadcasting signals that comprises multiplexing and transmitting a program including a video image, a sound and data, program relevant information related to the program, and first link information indicating a program broadcasted in the past and related to the program.

US 2002166128 discloses a broadcasting station transmitting a program of a continuous sequence of events as a transport stream so as to be received by at least a receiver, the broadcasting station providing the transport stream with link information showing the links between the transport stream it transmits in its own service area and the programs being transmitted in adjacent service areas.

### SUMMARY

Accordingly, the present disclosure is directed to digital television (DTV) receivers and methods for processing the DTV signal that substantially obviate one or more problems due to limitations and disadvantages of the related art.

An object of the present disclosure is to provide digital television (DTV) receivers and methods for processing the DTV signal, by which information on related events associated with a specific event currently being displayed or information on related channels associated with a specific channel currently being displayed can be provided.

Another object of the present disclosure is to provide an apparatus for processing related event information or related channel information and method thereof.

Additional advantages, objects, and features of the invention will be set forth in part in the description which follows and in part will become apparent to those having ordinary skill in the art upon examination of the following or may be learned from practice of the disclosure. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method is defined in claim 1.

In another aspect of the present disclosure, a method is defined in claim 9.

In another aspect of the present disclosure, a digital television is defined in claim 16.

In another aspect of the present disclosure, a digital television is defined in claim 20.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1A is an exemplary diagram of EIT section syntax including a related_event_descriptor;

FIG. 1B is another exemplary diagram of EIT section syntax including a related_event_descriptor;

FIG. 1C is an exemplary diagram of a related_event_descriptor;

FIG. 1D is an exemplary diagram of a type of a related event;

FIG. 1E is an exemplary diagram of a defined media type for carrying a related event;

FIG. 1F is an exemplary diagram of an implementation in a DTV receiver using related event information for a specific event currently viewing;

FIG. 2A is an exemplary diagram of SDT section syntax including a related_channel_descriptor;

FIG. 2B is another exemplary diagram of TVCT section syntax including a related_channel_descriptor;

FIG. 2C is an exemplary diagram of a related_channel_descriptor;

FIG. 2D is an exemplary diagram of a defined type of a related channel;

FIG. 2E is an exemplary diagram of a defined media type for carrying a related channel;

FIG. 2F is an exemplary diagram of an implementation in a DTV receiver using related channel information for a specific channel currently tuning;

FIG. 3 is an exemplary block diagram of a DTV receiver; and

FIG. 4 is an exemplary flowchart of a method for processing a DTV signal.

### DETAILED DESCRIPTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a digital television (DTV) signal including at least one of related event information and related channel information, an apparatus for processing the same, and a method thereof according to the present disclosure are explained in detail with reference to the accompanying drawings.

The present disclosure is characterized in providing related channel information defining one or more related channels associated with a current channel currently being displayed and related event information defining one or more related events associated with a current event currently being displayed on a single channel. In particular, the related channel information and related event information includes information a type of a media such as a terrestrial, a cable, a satellite, an internet protocol (IP) broadcasting, and the like and information on a channel of each of the media.

Hence, by utilizing information according to the present disclosure between different medium supported by a DTV receiver, a broadcast is received and provided to a viewer.

And, the present disclosure is applicable to all digital broadcasting systems in North America, E.U., and other regions.

In the following description, the technical idea of the present disclosure is explained in detail using tables included in European Digital Broadcasting Standard digital video broadcasting-service information (DVB-SI) and North American Digital Broadcasting Standard program and system information protocol (PSIP).

The present disclosure is applicable to other systems. And, it apparent to those skilled in the art that the present disclosure can be modified and amended.

First of all, related event information according to the present disclosure is explained as follows. In this case, the related event information is defined in a descriptor format of each table explained later for example. Optionally, it can be added in a field format that constructs section syntax of each of the tables.

And, a descriptor including the related event information shall be named a related_event_descriptor.

Description is made using the table included in the European DVB-SI. In this case, an event information table (EIT) provides chronological broadcast information of events (broadcast programs) included within each service among tables included in the DVB-SI is taken as an example for the following description.

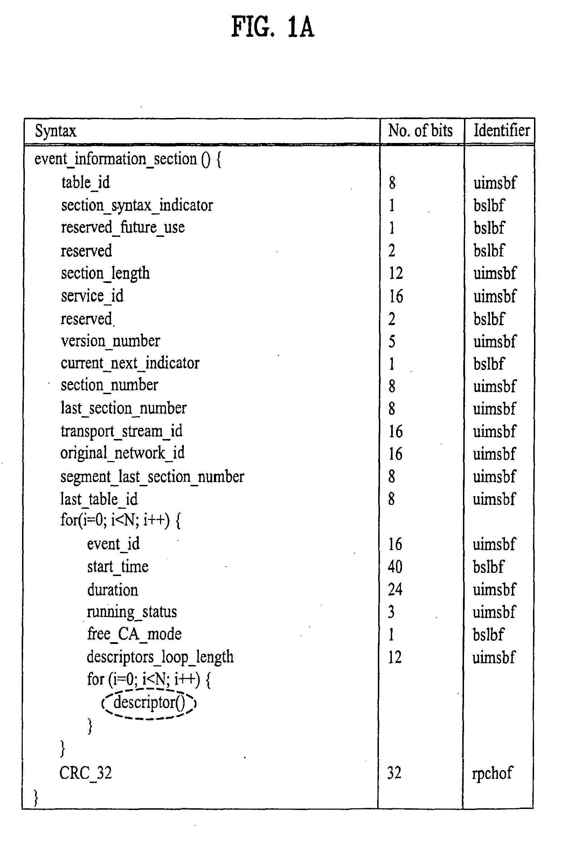

FIG. 1A is an exemplary diagram of EIT section syntax including a related_event_descriptor. Referring to FIG. 1A, a plurality of fields constructing the EIT section syntax are explained as follows.

A table_id field identifies this section as belonging to the EIT. A section_syntax_indicator field shall be set to '1'. A section_length field specifies a number of bytes of the section. A service_id field serves as a label to identify this service from any other service within a transport stream (TS). The service_id is the same as the program_number in the corresponding program_map_section. A version_number field is a version number of the sub_table. A current_next_indicator is 1-bit indicator, when set to '1' indicates that the sub_table is the currently applicable sub_table. A section_number field gives a number of the section. A last_section_number field specifies a number of the last section of the sub_table of which this section is part.

A transport_stream_id field serves as a label for identification of the TS, about which the EIT informs, from any other multiplex within the delivery system. An original_network_id field gives the label identifying the network_id of the originating delivery system. A segment_last_section_number field specifies the number of the last section of this segment of the sub_table. A last_table_id field identifies the last table_id used. An event_id field contains the identification number of the described event. A start_time field contains the start time of the event in Universal Time, Coordinated (UTC) and Modified Julian Date (MJD). A duration field contains duration of the event in hours, minutes, seconds.

A running_status field indicates a status of the event as defined. A free_CA_mode is a 1-bit field, when set to "0" indicates that all the component streams of the event are not scrambled. A descriptors_loop_length field gives a total length in bytes of the following descriptors. And, descriptors included in the EIT section are included within the loop structure by including the related_event_descriptor according to the present implementation. A CRC_32 field contains the Cyclic Redundancy Check (CRC) value that gives a zero output of the registers in the decoder.

Subsequently, description is made using table included in the North American PSIP. In this case, an event information table (EIT) containing information for events on defined virtual channels among tables included in the PSIP is taken as an example for the following description.

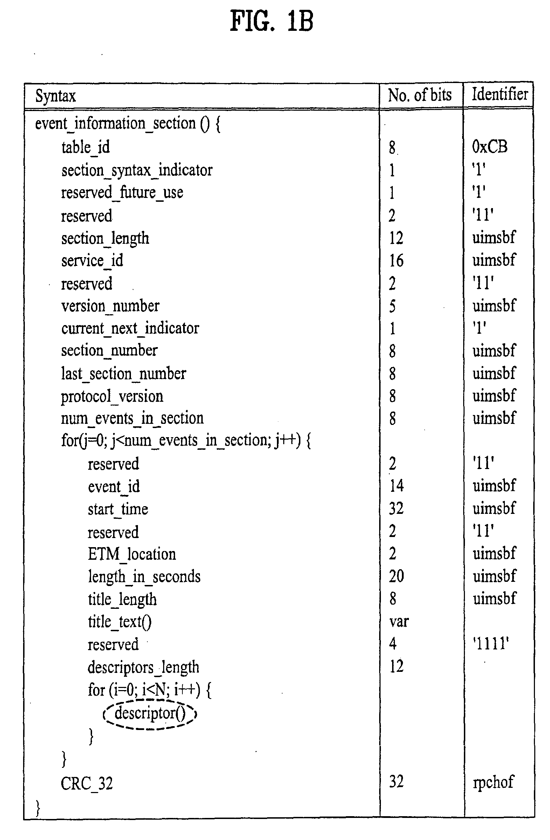

FIG. 1B is another exemplary diagram of EIT section syntax including a related_event_descriptor. Referring to FIG. 1B, a plurality of fields constructing the EIT section syntax are explained as follows.

A table_id field identifies this section as belonging to the EIT. A section_syntax_indicator field denotes that the section follows the generic section syntax beyond the section length field. A private_indicator field shall be set to '1'. A section_length field specifies a number of remaining bytes in this section immediately following the section_length field up to the end of the section. A source_id field specifies a source identification of the virtual channel carrying events described in this section. A version_number field is a version number of EIT-i.

A current_next_indicator is set to '1' for EIT sections. A section_number field gives a number of this section. A last_section_number field specifies a number of the last section. A protocol_version is an 8-bit unsigned integer field whose function is to allow, in the future, this table type to carry parameters that may be structured differently than those defined in the current protocol.

A num_events_in_section field indicates the number of events in this EIT section. An event_id field specifies an identification number of the event described. This number will serve as a part of the event ETM_id (identifier for event extended text message). A start_time is a 32-bit unsigned integer quantity which represents the start time of this event as the number of global positioning system (GPS) seconds since 00:00:00 UTC, January 6, 1980. An ETM_location field specifies an existence and a location of an Extended Text Message (ETM).

A title_text() field is an event title in the format of a multiple string structure. A descriptors_length field is total length (in bytes) of an event descriptor list that follows. A descriptor() is zero or more descriptors may be included in the EIT in an iteration of the event "for" loop. The types of descriptors defined for use in the EIT include a related_event_descriptor according to the present implementation. A CRC_32 field contains a CRC value that ensures a zero output from the registers in the decoder.

In the above description, the table including the related_event_descriptor for including the related event information according to the present disclosure is explained.

Hereinafter, the related_event_descriptor shall be explained in detail as follows.

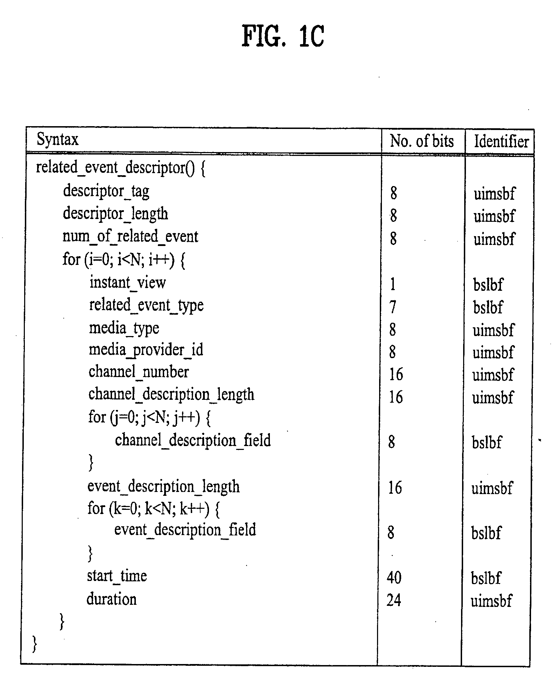

FIG. 1C is an exemplary diagram of a related_event_descriptor. Referring to FIG. 1C, a plurality of fields constructing the related_event_descriptor are explained as follows.

First of all, a descriptor_tag field indicates a type of a corresponding descriptor, and particularly, indicates that the corresponding descriptor is the related_event_descriptor for defining related event information. And, a descriptor_length field indicates a total length of the corresponding descriptor.

A num_of_related_events field indicates information on the number indicating how many related events associated with a current event currently being displayed there exist. In the following description, each field defines information on a corresponding related event by circling a loop structure as many as the number defined by the num_of_related_events field. What kind of information is defined within the loop structure is explained as follows.

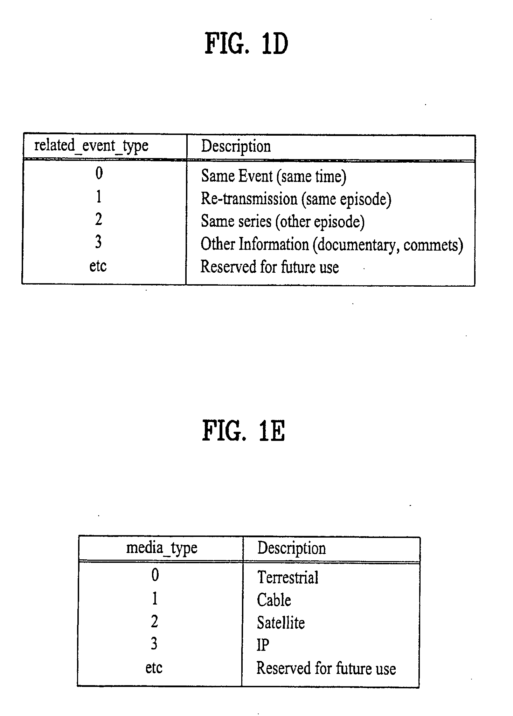

A related_event_type field defines relationships between the current event and the related events. For instance, the related_event_type field can be defined as FIG. 1D. If a value of this field is set to '0', it indicates a same event. If the value of this filed is set to '1', it indicates a re-transmitted event of the same episode. If the value of this filed is set to '2', it indicates an event in a same series, for instance, a different-episode events of the same series. If the value of this filed is set to '3', it indicates supplemental information related to the current event such as a documentary and comments. In this case, the values defined in FIG. 1D are just exemplary for convenience and clarity of this description.

A media_type field defines a type of a media which is used to transmit a channel for carrying the related events. For instance, the media_type field can be defined as FIG. 1E. If a value of the media_type field is set to '0', it defines terrestrial broadcasting. If a value of the media_type field is set to '1', it defines cable broadcasting. If a value of the media_type field is set to '2', it defines satellite broadcasting. If a value of the media_type field is set to '3', it defines internet protocol (IP) broadcasting. And, it can be observed that each related event is transmitted on a channel of the media defined by each of the fields. In this case, the values defined in FIG. 1E are just exemplary for convenience and clarity of this description.

And, a channel_number field defines a channel number of the channel for carrying the related events.

Thus, it is able to construct a single related_event_descriptor using the above-illustrated fields. Moreover, the related_event_descriptor, as shown in FIG. 1C, can be constructed by further including at least one of the following fields in addition to the above-illustrated fields.

An instant_view field defines whether to display instantly the related event information. For instance, if a current event currently being displayed is interrupted and if a broadcast is interconnected to a different interconnecting channel, a value of this field is set to '1' . In case of a channel list delivered to provide information only, a value of this filed is set to '0'.

A media_provider_id field defines a type of a media service provider who provides the related events. In particular, cable service providers can be divided into Comcast, Warner Brothers, and the like in case of North America. Satellite service providers can be divided into various service providers including DirectTV, Astra, and the like. So, unique identifications are assigned to the respective service providers. Since a conditional access may be put on some of the media service providers who provide related events, it is able to decide whether to receive a corresponding event in accordance with a conditional access authentication using the information.

A channel_description_length field indicates a length of channel_description_field item. A channel_description field provides such information on each channel for carrying a related event as a channel name and the like. An event_description_length field indicates a length of an event_description_field item. And, an event_description field provides such information on a related event as an event title and the like.

A start_time field provides information on a start time of each related event. In the digital video broadcasting specifications relevant to the present disclosure, UTC or MJD is used as a format for transmitting the time information like this field. Alternatively, a different format can be used as well. A duration field provides information on a duration time of each related event, i.e., information on a broadcast length, a broadcast time or the like. In the digital video broadcasting specifications relevant to the present disclosure, a value of hour/minute/second in a binary coded decimal (BCD) format is coded to 24 bits. Alternatively, a different format is usable.

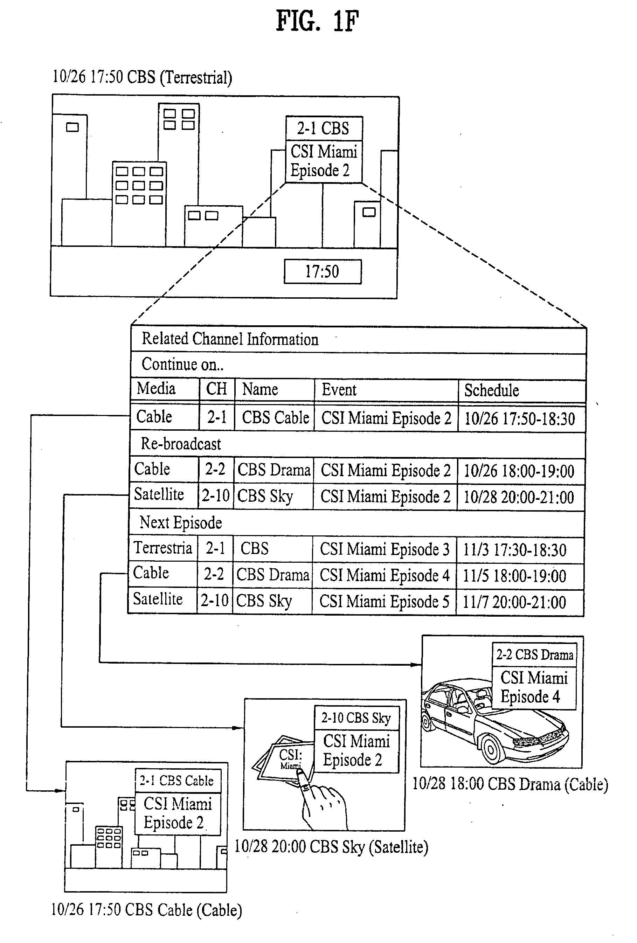

FIG. 1F is an exemplary diagram of an implementation in a DTV receiver using related event information for a specific event currently viewing.

An exemplary implementation of the above-defined related_event_descriptor received by a DTV receiver is explained as follows. In this case, it is assumed that a viewer makes a request for a display of information on an event associated with an event currently viewing to a DTV receiver using an input means.

A picture provided to a most upper part of FIG. 1F shows a current event currently being displayed by a viewer.

A picture below the above picture shows a screen on which related event information according to the present disclosure is parsed and displayed by a DTV receiver, in which 'continue-on', 're-broadcast', 'next episode' and the like are discriminated and displayed from each other.

FIG. 1F shows one example of the present disclosure, to which the present disclosure is not limited only. And, each implementation example is provided below in accordance with the discriminations.

The related event information, as shown in FIG. 1F, may include information on a media type, information on a channel number, information on a name, information on an event, and information on a schedule.

In particular, referring to FIG. 1F, while a user is viewing 'CSI Miami Episode 2' in CBS on terrestrial channel 2-1, if the user makes a request for related event information via an external input means such as a remote controller or an input means provided to a front panel of a system, a DTV receiver provides the corresponding information to the user in a manner of displaying the related event information included in a related_event_descriptor on a screen by parsing the related_event_descriptor included in a received DTV signal.

In this case, the related event information, as shown in FIG. 1F, can indicate that the same program (CSI Miami Episode 2) on channel 2-1 of cable media CBS Cable provided on the same time on a connective broadcast channel of the event 'CSI Miami Episode 2' on the currently being displayed terrestrial channel 2-1 of CBS, the same event on channel 2-2 of cable media CBS Drama provided as a re-broadcast between 18:00~19:00 on October 27, the same event (CSI Miami Episode 2) on channel 2-10 of satellite media CBS Sky provided between 20:00~21:00 on October 28, and an interconnected serial event of 'Episodes 3 to 5' following the same event (CSI Miami Episode 2) provided via terrestrial/cable/satellite on November 3 to 5 will be broadcasted.

The related event information can be configured to enable a channel switching in accordance with a selection made by a viewer and to enable an application to set a timer for recording of a related event.

And, information provided by unsupportable media is filtered off not to be displayed in accordance with such supportable media by a DTV receiver as related channel information that will be explained later.

Thus, the related event information is explained in the above description. FIGs. 1A to 1F are just exemplary to explain the technical idea of the present disclosure, by which implementations of the present disclosure are not restricted.

Next, related channel information according to the present disclosure is explained as follows. It is assumed that the related channel information is defined in a following descriptor format of each table for example. Optionally, the related channel information can be added in a format of fields constructing each table section. In the following description, a descriptor including the related channel information shall be named a related_channel_descriptor.

First of all, a table included in European DVB-SI is used for the following description. In this case, a service description table (SDT) describing services that are contained within a particular transport stream (TS) is selected as an example from tables included in the DVB-SI.

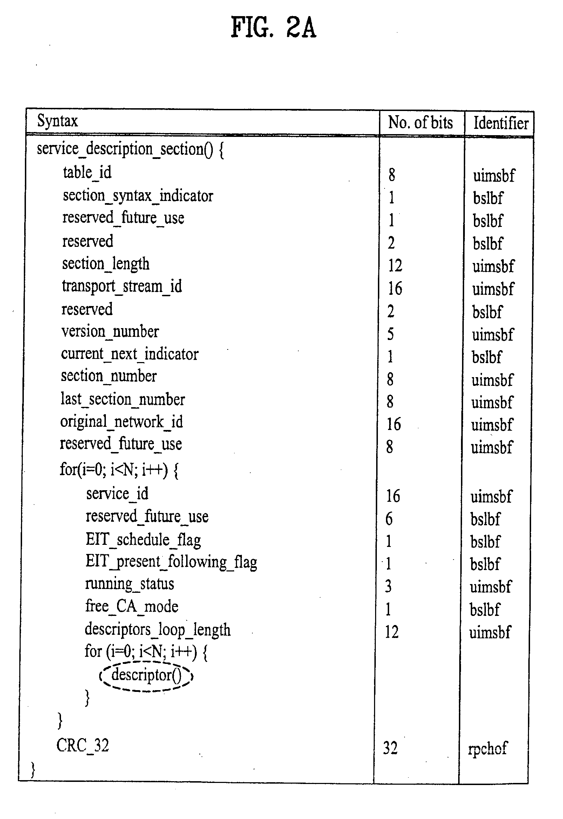

FIG. 2A is an exemplary diagram of SDT section syntax including the related_channel_descriptor.

A table_id field identifies this section as belonging to the EIT. A section_syntax_indicator field shall be set to '1'. A section_length field specifies a number of bytes of the section. A transport_stream_id field serves as a label for identification of the TS, about which the SDT informs, from any other multiplex within the delivery system. A version_number field is a version number of the sub_table. A current_next_indicator is a 1-bit indicator, when set to '1' indicates that the sub_table is the currently applicable sub_table. A section_number field gives a number of the section. A last_section_number field specifies a number of the last section of the sub_table of which this section is part.

An original_network_id field gives a label identifying the network_id of the originating delivery system. A service_id field serves as a label to identify this service from any other service within the TS. The service_id is the same as the program_number in the corresponding program_map_section. An EIT_schedule_flag is a 1-bit field which when set to '1' indicates that EIT schedule information for the service is present in the current TS. An EIT _present - following- flag is a 1-bit field which when set to "1" indicates that EIT_present_following information for the service is present in the current TS.

A running_status is a 3-bit field indicating the status of the service as defined. A free_CA_mode is a 1-bit field, when set to '0' indicates that all the component streams of the service are not scrambled. A descriptors loop length field gives a total length in bytes of the following descriptors. The following descriptor includes a related_channel_descriptor according to the present implementation. A CRC_32 field contains a CRC value that gives a zero output of the registers in the decoder defined.

The following description is made by taking virtual channel table (VCT), which includes information on a virtual channel for digital broadcasting in PSIP table of North American system, as an example. In this case, the related channel information can be included in a table transmitted by MPEG-2 as well as the VCT of the PSIP.

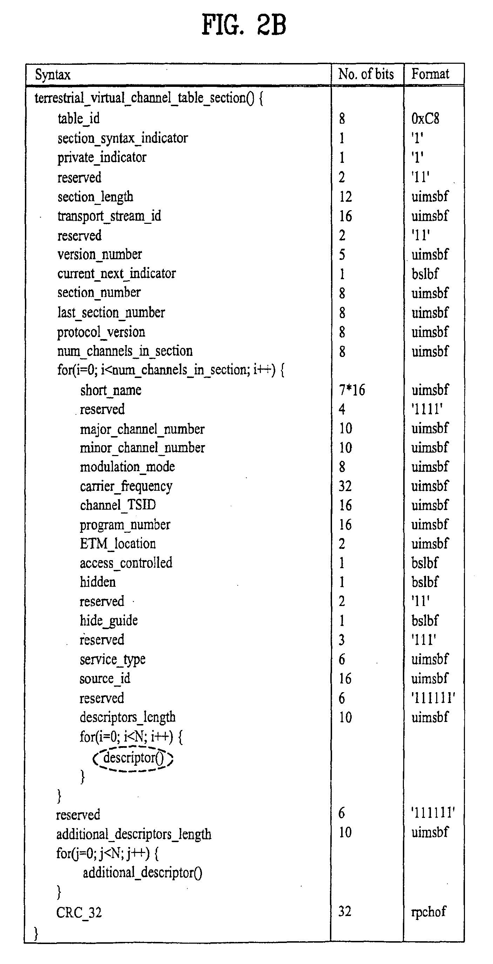

FIG. 2B is another exemplary diagram of TVCT section syntax including the related_channel_descriptor. A plurality of fields constructing the TVCT section syntax is explained as follows.

A table_id field indicates the type of table section being defined here. A section_syntax_indicator field shall be set to '1'. A private_indicator field shall be set to '1' A section_length field specifies the number of bytes of the section. A transport_stream_id field specifies MPEG-2 Transport Stream ID, as it appears in the Program Association Table (PAT) identified by a PID value of zero for this multiplex. A version_number field gives a version number of the VCT.

A current_next_indicator is used to determine whether the VCT sent is currently applicable or not. A section_number field gives a number of this section. A last_section_number field specifies a number of a last section of the complete TVCT. A protocol_version is an 8-bit unsigned integer field whose function is to allow, in the future, this table type to carry parameters that may be structured differently than those defined in the current protocol.

A num_channels_in_section field specifies a number of virtual channels in this VCT section. A short_name field specifies a name of the virtual channel, represented as a sequence of one to seven 16-bit code values interpreted in accordance with the UTF-16 representation of Unicode character data.

A major_channel_number is a 10-bit number that represents the 'major' channel number associated with the virtual channel being defined in this iteration of the 'for' loop. Each virtual channel shall be associated with a major and a minor channel number. A minor_channel_number is a 10-bit number in the range 0 to 999 that represents the 'minor' or 'sub'- channel number. This field, together with major_channel_number, performs as a two-part channel number, where minor_channel_number represents the second or right-hand part of the number.

A modulation_mode is an 8-bit unsigned integer number that indicates the modulation mode for the transmitted carrier associated with this virtual channel. A carrier_frequency is the recommended value for these 32 bits is zero. Use of this field to identify carrier frequency is allowed, but is deprecated. The value of channel_TSID given in the VCT is matched against TSID values to form the association between PSIP data and transmitted content.

A channel_TSID field represents the MPEG-2 Transport Stream ID associated with the TS carrying the MPEG-2 program referenced by this virtual channel. A program_number field associates the virtual channel being defined here with the MPEG-2 program association and TS program map tables. An ETM_location field specifies the existence and the location of an Extended Text Message (ETM). An access_controlled is a 1-bit Boolean flag that indicates, when set, that the events associated with this virtual channel may be access controlled.

A hidden is a 1-bit Boolean flag that indicates, when set, that the virtual channel is not accessed by the user by direct entry of the virtual channel number. Hidden virtual channels are skipped when the user is channel surfing, and appear as if undefined, if accessed by direct channel entry. A hide_guide is a Boolean flag that indicates, when set to '0' for a hidden channel, that the virtual channel and its events may appear in EPG displays. This bit shall be ignored for channels which do not have the hidden bit set, so that non-hidden channels and their events may always be included in EPG displays regardless of the state of the hide_guide bit.

A service_type field shall identify the type of service carried in this virtual channel. A source_id field identifies a programming source associated with the virtual channel. In this context, a source is one specific source of video, text, data, or audio programming. A descriptors_length is total length (in bytes) of the descriptors for this virtual channel that follows. A descriptor() is zero or more descriptors, as appropriate, may be included. Also, the descriptor() comprises a related_channel_descriptor according to the present implementation. An additional_descriptors_length is total length (in bytes) of the VCT descriptor list that follows. A CRC_32 is a 32-bit field that contains the CRC value that ensures a zero output from the registers in the decoder.

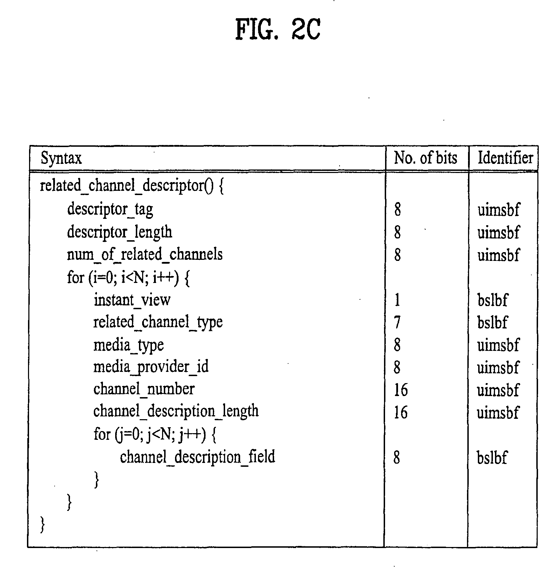

The related_channel_descriptor defined by the present disclosure is explained as follows. FIG. 2C is an exemplary diagram of the related_channel_descriptor. A plurality of fields including the related_channel_descriptor is explained as follows.

First of all, a descriptor_tag field provides information on a type of a descriptor and indicates that the descriptor is a related_channel_descriptor that defines related channel information in association with the present disclosure. And, a descriptor_length field indicates a total length of the corresponding descriptor.

A num_of_related_channels field indicates information on the number indicating how many related channels associated with a current channel currently being displayed. In the following description, each field defines information on a corresponding related channel by circling a loop structure as many as the number defined by the num of related channels field. What kind of information is defined within the loop structure is explained as follows.

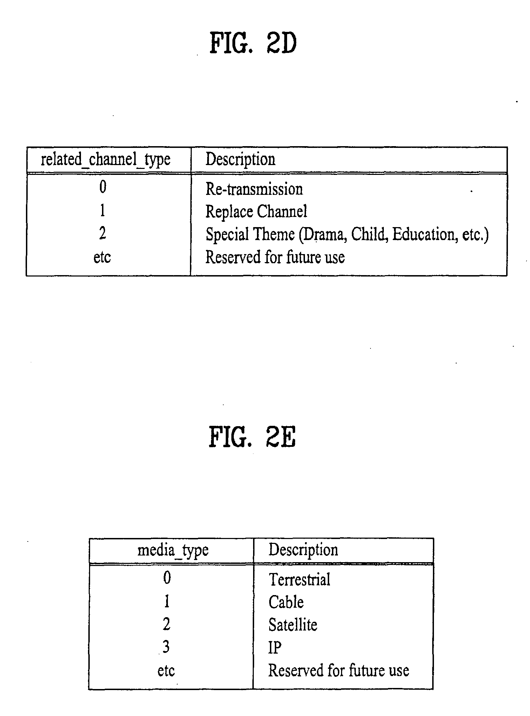

A related_channel_type field defines relationships between the current channel and the related channels. For instance, the related_channel_type field can be defined as FIG. 2D. If a value of this field is set to 0, it indicates that a related channel is retransmission channel. If the value of this filed is set to 1, it indicates that a related channel is a replace channel in case that the current channel currently being displayed is interrupted. If the value of this filed is set to 2, it indicates that a related channel is a channel for a specific purpose of drama, child, and the like. In this case, the values defined in FIG. 2D are just exemplary for convenience and clarity of this description.

A media_type field defines a type of media for transmitting each related channel. For instance, the media_type field can be defined as FIG. 2E. If a value of the media_type field is set to 0, it defines terrestrial broadcasting. If a value of the media_type field is set to 1, it defines cable broadcasting. If a value of the media_type field is set to 2, it defines satellite broadcasting. If a value of the media_type field is set to 3, it defines an internet protocol (IP) broadcasting. In this case, the values defined in FIG. 2E are just exemplary for convenience and clarity of this description.

And, a channel_number field defines a channel number of each related channel.

Thus, it is able to construct a single related_channel_descriptor using the above-illustrated fields. Moreover, a single related_channel_descriptor, as shown in FIG. 2C, can be constructed by further including at least one of the following fields in addition to the above-illustrated fields.

An instant_view field defines whether to display instantly the related channel information. For instance, if the current channel is interrupted and if a broadcast is interconnected to a different interconnecting channel, a value of this field is set to 1. In case of a channel list delivered to provide information only, a value of this filed is set to 0.

A media_provider_id field identifies a type of a media service provider who transmits each related channel. In particular, cable service providers can be divided into Comcast, Warner Brothers, and the like in case of North America. Satellite service providers can be divided into various service providers including DirectTV, Astra, and the like. So, unique identifications are assigned to the respective service providers. Since a conditional access may be put on some of the media service providers who provide related channels, a user is able to decide whether to switch to a related channel in accordance with a conditional access authentication using the information.

A channel_description_length field indicates information on a length of channel_description_field item. The channel_description_field field provides such information on each channel as a name of a related channel and the like.

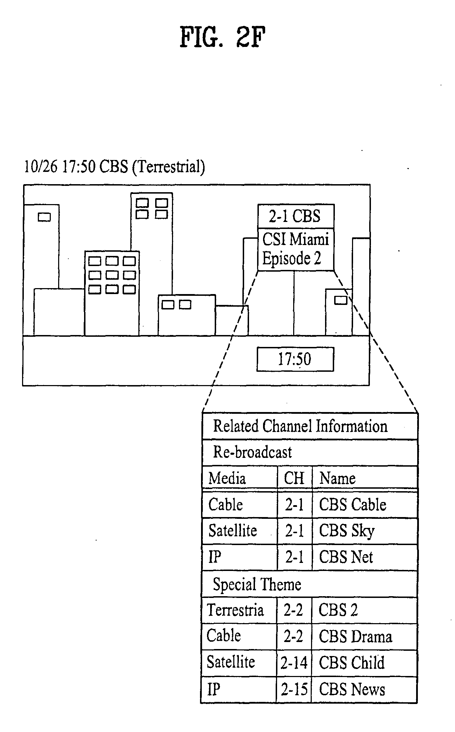

An exemplary implementation of the above-defined related_channel_descriptor in a DTV receiver is explained as follows. FIG. 2F is a diagram of an implementation in a DTV receiver using related channel information for the current channel currently being displayed. In this case, it is assumed that a viewer makes a request for a display of information on a related channel associated with a current channel currently being displayed using an input means.

A picture provided to a most upper part of FIG. 2F shows a current channel currently being displayed by a viewer.

A picture below the above picture shows a screen on which related channel information defined according to the present disclosure is parsed and displayed by a DTV receiver, which can be mainly divided into rebroadcast and special theme. And, each can include information on a media type, channel number and name. This is to explain the related channel information according to the present disclosure, by which implementations of the present disclosure are not restricted.

In particular, while a viewer is viewing 'CSI Miami Episode 2' in CBS on terrestrial channel 2-1, if the user makes a request for information on a related channel associated with a current channel currently being displayed via an external input means such as a remote controller or an input means provided to a front panel of a system, a DTV receiver provides the corresponding information to the user in a manner of displaying related channel information included in a related_channel_descriptor on a screen by parsing the related_channel_descriptor included in a received DTV signal.

In this case, the related channel information, as shown in FIG. 2F, can include information indicating that there are CBS Cable of cable 2-1, CBS Sky of satellite 2-1, CBS net of IP 2-1, and the like as retransmission channels of a channel currently tuned by a user and information indicating that there are CBS2 of terrestrial 202, DBS Drama of cable 2-2, CBS Child of satellite 2-13, CBS News of IP2-15, and the like as other related channels.

The related channel information can be configured to enable a channel switching in accordance with a selection made by a viewer in case that a DTV receiver supports corresponding media (e.g., terrestrial, cable, etc.). And, a viewer is enabled to view the supported media only by filtering information inputted via the related channel in accordance with a supportable function of the DTV receiver. In particular, if a DTV receiver supports terrestrial and IP only, IP 2-1 CBS Net, terrestrial 2-2 CBS2 and IP 2-15 CBS News in the list of Picture 1 are displayed only.

Thus, the related channel information is explained in the above description. FIGs. 2A to 2F are just exemplary to explain the technical idea of the present disclosure, by which implementations of the present disclosure are not restricted. In particular, related channel information according to the present disclosure is applicable to a table carried by MPEG-2 transport stream or a table defined by Digital Video Broadcasting Standard.

An apparatus for receiving and processing a digital television (DTV) signal including the above-explained related event information and related channel information is explained as follows.

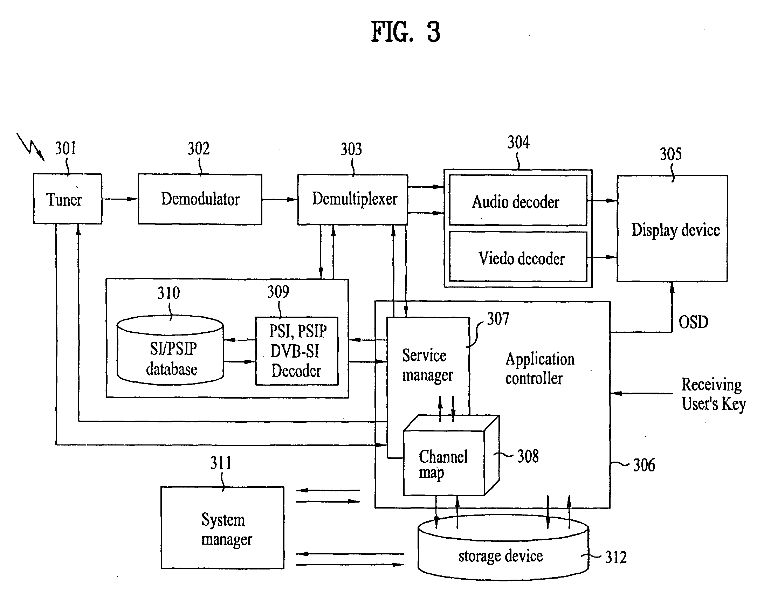

FIG. 3 is an exemplary block diagram of the DTV receiver. The DTV receiver is configured to support at least one of media including terrestrial, satellite, cable and internet protocol (IP) only. Optionally, the DTV receiver has a hybrid structure to support at least two of media including terrestrial, satellite, cable and IP. In case that the DTV receiver has the hybrid structure, a tuner, a demodulator and a demultiplexer among the elements configuring the DTV receiver may differ in accordance of each of the media and the rest of the elements may remain intact.

Referring to FIG. 3, the DTV receiver may include a tuner 301, a demodulator 302, a demultiplexer 303, an audio/video decoder 304, a display device 305, an application & user interface (UI) controller (Hereinafter, 'application controller') 306, a service manager 307, a channel map 308, a PSI/PSIP/DVB decoder 309, a PSI/PSIP/DVB database 310, a system manager 311, and a storage device 312.

The tuner 301 receives the DTV signal according to the present disclosure. In this case, the DTV signal can be transmitted by terrestrial, cable, satellite or IP. The tuner 301 transports strength and result of the received signal to the service manager 307 under the control of the service manager 307.

The demodulator 302 demodulates the received DTV signal. For instance, the demodulator 302 demodulates a terrestrial television signal of North American system by 64 or 256 Vestigial SideBand/Enhanced Vestigial SideBand (VSB/EVSB). The demodulator 302 demodulates a cable television signal by 64 or 256 Quadrature Amplitude Modulation (QAM).

The demultiplexer 303 demultiplexes inputted transport packets into audio, video and tables. The demultiplexer 303 demultiplexes tables of Program Specific Information (PSI), Program and System Information Protocol (PSIP) and Digital Video Broadcasting-Service Information (DVB-SI) into sections of the corresponding tables and then transports the sections to the PSI/PSIP/DVB decoder 309 under the control of the PSI/PSIP/DVB decoder 309. In particular, the demultiplexer 303 generates the sections of the corresponding tables by receiving and demultiplexing the tables including related_event_descriptor or related_channel_descriptor and then transports the generated sections to the PSI/PSIP/DVB decoder 309. And, the demultiplexer 303 demultiplexes audio/video transport packets under the control of the service manager 307.

FIG. 3 shows an exemplary case that there exist a tuner, a demodulator, and a demultiplexer, thereby supporting a single medium only. Yet, if the DTV receiver has the hybrid structure, it can be provided with tuners, demodulators and demultiplexers as many as the number of media that can be supported by the DTV receiver.

The A/V decoder 304 decodes received A/V elementary stream (ES) packets. The display unit 305 receives the decoded A/V data and then displays the received data.

The application controller 306 supports a graphic user interface (GUI) on a display screen and receives a viewer input received via an input means such as a remote controller or a front panel. The application controller 306 tosses a key command for a channel selection to the service manager 307, controls key sates of a whole system, and controls setup data to be stored in the storage device 312.

The service manager 307 controls the tuner 301 and creates a channel map 308. The service manager 307 resets channel information in the PSI/PSIP/DVB decoder 309 and requests channel information from the PSI/PSIP/DVB decoder 309. And, the service manager 307 sets packet identifier (PID) of A/V in the demultiplxer 303.

The PSI/PSIP/DVB decoder 309 is a control module of PSI/PSIP/DVB-SI and performs a slave operation controlled by the service manager 307. The PSI/PSIP/DVB decoder 309 sets PIDs of PSI/PSIP/DVB-SI tables in the demultiplexer 303. The PSI/PSIP/DVB decoder 309 receives PSI section and then creates the PSI database 310 for MPEG-2 system. The PSI/PSIP/DVB decoder 309 receives PSIP/DVB-SI section and then creates the SI/PSIP database 310 for ATSC/DVB. In this case, the tables including the related_event_descriptor or related_channel_descriptor are included in the created SI/PSIP database 310.

The system manager 311 controls a system boot flow for system booting by turning on/off a power. And, the system manager 311 stores Read Only Memory (ROM) image including software image written in or downloaded to the storage device 312.

A method of processing a digital television (DTV) signal including related event information or/and related channel information of the present disclosure in the above-explained DTV receiver according to the present disclosure is explained as follows.

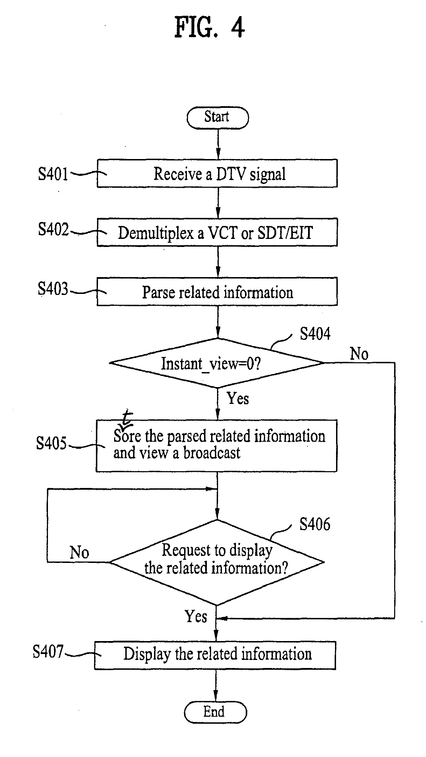

FIG. 4 is an exemplary flowchart of a method for processing the DTV signal.

Referring to FIG. 4, if a power of a DTV receiver is turned on by a viewer or if a channel is switched by a viewer, a channel is moved to a target channel by tuning to a corresponding frequency stored in a channel map 308 of the DTV receiver (S401).

Subsequently, the DTV receiver tries to receive a DTV signal including VCT or SDT/EIT. And, the DTV receiver demultiplexes the VCT or SDT/EIT from the received DTV signal (S402).

The DTV receiver parses related information (related channel information/related event information) from the demultiplexed the VCT or SDT/EIT (S403).

It is decided whether to display the parsed related information on a screen instantly (S404). In this case, the decision depends on a value of the instant_view field shown in FIG. 1C or FIG. 2C.

If it is decided not to instantly display the parsed related information in accordance with the value of the instant_view field, the parsed related information is stored in a database 310 and a broadcast is viewed (S405).

Subsequently, it is decided whether a viewer makes a request for related information via an input means (S406).

If it is decided that the viewer made the request, the related information according to the corresponding request is displayed on the screen (S407). In displaying the corresponding information, media type items not supported by the corresponding receiver can be excluded from the screen.

It is then able to decide whether the viewer attempts a change or switching to a corresponding event or channel using the displayed event/channel associated information.

As a result of the decision, if the viewer attempts the change or switching, it is able to change or switch to the related event/channel by tuning to a frequency of the channel map 308. On the contrary, if the viewer does not attempt the change or switching, it is decided whether to set a timer for recording related event or channel. If the viewer attempts to set a timer for recording related event or channel, the related event or channel is recording. If not, the viewer just continues to view the previous broadcast.

If it is decided to instantly display the parsed related information in accordance with the value of the instant_view field, the routine goes back to the step S407 and then executes the subsequent steps.

In the above description, the DTV receiver itself decides whether to display the related event or the related channel list on the screen in accordance with the value of the instant_view field. Using the field value, it is able to make an instant switching without a viewer request in case of an emergency service. Yet, in case of an interconnecting channel for an interrupted broadcast due to a limit of an allocated broadcast time, the switching can be performed in accordance with a request made by a viewer or the like.

As mentioned in the foregoing description, it is able to decide whether to delete information of the displayed related event or related channel provided by a media not supported by the corresponding DTV receiver.

In case that there is a setup or the like made by a viewer or the like in association with the deletion, it is able to abide by the setup. For instance, in case that the viewer sets up the execution of the deletion, the information provided by the media not supported by the DTV receiver may confuse the viewer in case of setting a timer for recording the related event or the related channel for example. The corresponding information can be deleted from the displayed list.

Accordingly, the present disclosure provides a viewer with related information associated with a current event currently being displayed or a current channel currently being displayed. And, the present disclosure provides a viewer with information of a related event or a related channel for a different channel interconnection of a relay broadcast, an emergency alert broadcast announcement and the like, thereby enhancing viewer's convenience by settling the inconvenience for a viewer to switch channels one by one.

It will be apparent to those skilled in the art that various modifications and variations can be made in the present disclosure without departing from the scope of the inventions. Thus, it is intended that the present invention covers the modifications and variations of this disclosure provided they come within the scope of the appended claims and their equivalents.

## Claims

1. A method of processing a digital television signal in a digital television receiver, the method comprising:
receiving (S401) a digital television signal including an event information table providing information in chronological order relating to one or more events contained within each service;
demodulating the received digital television signal;
demultiplexing (S402) the event information table from the demodulated digital television signal;
parsing (S403) related event information from the demultiplexed event information table,
wherein the related event information specifies one or more related events associated with a current event which is currently being displayed, and the related event information includes type information identifying a type of media transmitting the one or more related events and identification information identifying a media provider in accordance with the type information;
filtering off information which relates to one or more related events transmitted through media which are not supported by the digital television; and
displaying (S407) related event information which is not filtered off,
wherein the type information includes at least a type of media being different from a medium that is currently being used by the digital television receiver for receiving a current event, and the type information includes at least one of a terrestrial, cable and an internet protocol.

2. The method of claim 1, wherein the related event information further includes at least one of:
first information defining relationships between the current event and the related events, second information defining a service number of the service for carrying the related events, and third information defining a start time and a duration time for each related event.

3. The method of claim 2, wherein the related event information further comprises fourth information indicating whether to immediately display the related event information.

4. The method of claim 2, wherein the first information identifies each related event as at least one of a same event, a re-transmitted event, one or more events in a same series, and a supplementary event including supplemental information related to the current event.

5. The method of claim 3, wherein the specific related event information is configured to enable a service switching in accordance with a selection made by a viewer or the fourth information.

6. The method of claim 1, further comprising displaying a corresponding related event requested from the displayed specific related event information when a second request is received from the viewer.

7. The method of claim 1, further comprising setting a timer for recording at least one of the displayed related event information when a second request is received from the viewer.

8. The method of claim 1, wherein the event information table is included in a digital video broadcasting-service information table.

9. A method of processing a digital television signal in a digital television receiver, the method comprising:
receiving (S401) a digital television signal including a service description table describing services that are contained within a particular transport stream;
demultiplexing (S402) the service description table from the received digital television signal;
parsing (S403) related service information from the demultiplexed service description table,
wherein the related service information specifies one or more related services associated with a current service which is currently being displayed, and the related service information includes type information identifying a type of media transmitting the one or more related services and identification information identifying a media provider in accordance with the type information;
filtering off information which relates to one or more related services transmitted through media which are not supported by the digital television; and
displaying (S407) related service information which is not filtered off,
wherein the type information includes at least a type of media being different from a medium that is currently being used by the digital television receiver for receiving a current service, and the type information includes at least one of a terrestrial, cable and an internet protocol.

10. The method of claim 9, wherein the related service information further includes at least one of:
first information defining relationships between the current service and the related services, second information defining a service number of the related services, and a third information indicating whether to immediately display the related service information or not.

11. The method of claim 10, further comprising setting a timer for recording a specific service requested in the displayed related service information when a request is received from a viewer.

12. The method of claim 10, wherein the first information identifies each related service as at least one of re-transmission service, replace service replacing the current service, and special theme service.

13. The method of claim 9, wherein the specific related service information is configured to enable a service switching in accordance with a selection made by a viewer or the third information.

14. The method of claim 13, further comprising displaying a corresponding related service requested from the displayed related service information when a second request is received from the viewer.

15. The method of claim 9, wherein the service description table is included in digital video broadcasting-service information.

16. A digital television receiver comprising:
a tuner (301) tuning to a channel to receive a digital television signal including an event information table providing information in chronological order regarding one or more events contained within each service;
a demodulator (302) demodulating the received digital television signal;
a demultiplexer (303) demultiplexing the event information table from the demodulated digital television signal;
a parser parsing related event information from the demultiplexed event information table, the related event information defining one or more related events associated with an event which is currently being displayed, type information identifying a type of media transmitting the one or more related services and identification information identifying a media provider in accordance with the type information;
a controller (306) filtering off information which relates to one or more related events transmitted through media which are not supported by the digital television; and
a display (305) displaying specific related event information which is not filtered off;
wherein the controller further controls the operation of the parser, storage, and display, and
wherein the type information includes at least a type of media being different from a medium that is currently being used by the digital television receiver for receiving a current event, and the type information includes at least one of a terrestrial, a cable and an internet protocol.

17. The receiver of claim 16, wherein the parser parses related event information further includes at least one of:
first information defining relationships between the current event and the related events, second information defining a service number of the service for carrying the related events, third information defining a start time and a duration time for each related event, and fourth information indicating whether to immediately display the related event information.

18. The receiver of claim 16, wherein the controller is configured to enable a service switching in accordance with a selection made by a viewer or the fourth information.

19. The receiver of claim 16, wherein the controller is configured to set a timer for recording at least one of the displayed related event information when a request is received from a viewer and extract the event information table in a digital video broadcasting-service information.

20. A digital television receiver comprising:
a tuner (301) tuning to a channel to receive a digital television signal including a service description table describing services being contained within a particular transport stream;
a demodulator (302) demodulating the received digital television signal;
a demultiplexer (303) demultiplexing the service description table from the demodulated digital television signal;
a parser parsing related service information from the demultiplexed service description table, the related service information defining related services associated with a current service currently being displayed, type information identifying a type of media transmitting the one or more related services and identification information identifying a media provider in accordance with the type information;
a controller (306) filtering off information which relates to one or more related services transmitted through media which are not supported by the digital television; and
a display (305) displaying specific related service information which is not filtered off;
wherein the controller further controls the operation of the parser, storage, and display, and
wherein the type information includes at least a type of media being different from a medium that is currently being used by the digital television receiver for receiving a current service, and the type information includes at least one of a terrestrial, a cable and an internet protocol.

21. The receiver of claim 20, wherein the parser parses related service information comprises at least one of:
first information defining relationships between the current service and the related services, second information defining a service number of the related services, and third information indicating whether to immediately display the related service information.

22. The receiver of claim 20, wherein the controller is configured to enable a service switching in accordance with a selection made by a viewer or the third information.

23. The receiver of claim 20, wherein the controller is configured to set a timer for recording a specific service requested in the displayed related service information when a request is received from a viewer and extracts the service description table in a digital video broadcasting-service information.

## Patentansprüche

1. Verfahren zum Verarbeiten eines digitalen Fernsehsignals in einem digitalen Fernsehempfänger, wobei das Verfahren aufweist:
Empfangen (S401) eines digitalen Fernsehsignals einschließlich einer Ereignisinformationstabelle, die Informationen bezüglich eines oder mehrerer in jedem Dienst enthaltener Ereignisse in einer chronologischen Reihenfolge bereitstellt;
Demodulieren des empfangenen digitalen Fernsehsignals;
Demultiplexen (S402) der Ereignisinformationstabelle aus dem demodulierten digitalen Fernsehsignal;
syntaktisches Analysieren (S403) verwandter Ereignisinformationen aus der demultiplexten Ereignisinformationstabelle,
wobei die verwandten Ereignisinformationen ein oder mehrere verwandte Ereignisse spezifizieren, die mit einem gegenwärtigen Ereignis, das gerade angezeigt wird, zusammenhängen, und die verwandten Ereignisinformationen Typeninformationen umfassen, die einen Medientyp identifizieren, der das eine oder die mehreren verwandten Ereignisse überträgt, und Identifikationsinformationen, die gemäß den Typeninformationen einen Medienanbieter identifizieren;
Ausfiltern von Informationen, die ein oder mehrere verwandte Ereignisse betreffen, die durch Medien übertragen werden, die von dem digitalen Fernsehen nicht unterstützt werden; und
Anzeigen (S407) verwandter Ereignisinformationen, die nicht ausgefiltert werden,
wobei die Typeninformationen wenigstens einen Medientyp umfassen, der sich von dem Medium unterscheidet, das gegenwärtig von dem digitalen Fernsehempfänger verwendet wird, um ein gegenwärtiges Ereignis zu empfangen, und die Typeninformationen mindestens eines von einem terrestrischen, einem Kabel- und einem Internetprotokoll aufweist.

2. Verfahren nach Anspruch 1, wobei die verwandten Ereignisinformationen ferner wenigstens eine der folgenden aufweisen:
erste Informationen, die Beziehungen zwischen dem gegenwärtigen Ereignis und den verwandten Ereignissen definieren, zweite Informationen, die eine Dienstnummer des Dienstes zum Befördern der verwandten Ereignisse definieren, und dritte Informationen, die eine Startzeit und eine Zeitdauer für jedes verwandte Ereignis definieren.

3. Verfahren nach Anspruch 2, wobei die verwandten Ereignisinformationen ferner vierte Informationen aufweisen, die anzeigen, ob die verwandten Ereignisinformationen sofort angezeigt werden sollen.

4. Verfahren nach Anspruch 2, wobei die ersten Informationen jedes verwandte Ereignis als mindestens eines von einem gleichen Ereignis, einem wiederübertragenen Ereignis, einem oder mehreren Ereignissen in einer gleichen Serie und einem zusätzlichen Ereignis, das zusätzliche Informationen bezüglich des gegenwärtigen Ereignisses umfasst, identifiziert.

5. Verfahren nach Anspruch 3, wobei die spezifischen verwandten Ereignisinformationen konfiguriert sind, um eine Dienstumschaltung gemäß einer Auswahl zu ermöglichen, die von einem Zuschauer oder den vierten Informationen getroffen wird.

6. Verfahren nach Anspruch 1, das ferner das Anzeigen eines entsprechenden verwandten Ereignisses aufweist, das von den angezeigten spezifischen verwandten Ereignisinformationen angefordert wird, wenn eine zweite Anforderung von dem Zuschauer empfangen wird.

7. Verfahren nach Anspruch 1, das ferner aufweist:
Festlegen eines Zeitschalters zum Aufzeichnen wenigstens einer der angezeigten verwandten Ereignisinformationen, wenn eine zweite Anforderung von dem Zuschauer empfangen wird.

8. Verfahren nach Anspruch 1, wobei die Ereignisinformationstabelle in einer digitalen Videoausstrahlungsdienst-Informationstabelle enthalten ist.

9. Verfahren zum Verarbeiten eines digitalen Fernsehsignals in einem digitalen Fernsehempfänger, wobei das Verfahren aufweist:
Empfangen (S401) eines digitalen Fernsehsignals einschließlich einer Dienstbeschreibungstabelle, die Dienste beschreibt, die in einem bestimmten Transportstrom enthalten sind;
Demultiplexen (S402) der Dienstbeschreibungstabelle aus dem empfangenen digitalen Fernsehsignal;
syntaktisches Analysieren (S403) verwandter Dienstinformationen aus der demultiplexten Dienstbeschreibungstabelle,
wobei die verwandten Dienstinformationen ein oder mehrere verwandte Dienste spezifizieren, die mit einem gegenwärtigen Dienst, der gerade angezeigt wird, zusammenhängen, und die verwandten Dienstinformationen Typeninformationen umfassen, die einen Medientyp identifizieren, der den eine oder die mehreren verwandten Dienste überträgt, und Identifikationsinformationen, die gemäß den Typeninformationen einen Medienanbieter identifizieren;
Ausfiltern von Informationen, die einen oder mehrere verwandte Dienste betreffen, die durch Medien übertragen werden, die von dem digitalen Fernsehen nicht unterstützt werden; und
Anzeigen (S407) verwandter Dienstinformationen, die nicht ausgefiltert werden,
wobei die Typeninformationen wenigstens einen Medientyp umfassen, der sich von dem Medium unterscheidet, das gegenwärtig von dem digitalen Fernsehempfänger verwendet wird, um einen gegenwärtigen Dienst zu empfangen, und die Typeninformationen mindestens eines von einem terrestrischen, einem Kabel- und einem Internetprotokoll aufweist.

10. Verfahren nach Anspruch 9, wobei die verwandten Dienstinformationen ferner wenigstens eine der folgenden aufweisen:
erste Informationen, die Beziehungen zwischen dem gegenwärtigen Dienst und den verwandten Diensten definieren, zweite Informationen, die eine Dienstnummer der verwandten Dienste definieren, und dritte Informationen, die anzeigen, ob die verwandten Dienstinformationen sofort angezeigt werden sollen oder nicht.

11. Verfahren nach Anspruch 10, das ferner das Festlegen eines Zeitschalters für das Aufzeichnen eines spezifischen Dienstes aufweist, der in den angezeigten verwandten Dienstinformationen angefordert wird, wenn eine Anforderung von einem Zuschauer empfangen wird.

12. Verfahren nach Anspruch 10, wobei die ersten Informationen jeden verwandten Dienst als mindestens einen von einem wiederübertragenen Dienst, einem Ersatzdienst, der den gegenwärtigen Dienst ersetzt, und einem Spezialthemendienst identifiziert.

13. Verfahren nach Anspruch 9, wobei die spezifischen verwandten Dienstinformationen konfiguriert sind, um eine Dienstumschaltung gemäß einer Auswahl zu ermöglichen, die von einem Zuschauer oder den dritten Informationen getroffen wird.

14. Verfahren nach Anspruch 13, das ferner das Anzeigen eines entsprechenden verwandten Dienstes aufweist, der von den angezeigten spezifischen verwandten Dienstinformationen angefordert wird, wenn eine zweite Anforderung von dem Zuschauer empfangen wird.

15. Verfahren nach Anspruch 9, wobei die Dienstbeschreibungstabelle in einer digitalen Videoausstrahlungsdienstinformation enthalten ist.

16. Digitaler Fernsehempfänger, der aufweist:
einen Kanalwähler (301), der einen Kanal einstellt, um ein digitales Fernsehsignal zu empfangen, das eine Ereignisinformationstabelle umfasst, die Informationen bezüglich eines oder mehrerer in jedem Dienst enthaltener Ereignisse in einer chronologischen Reihenfolge bereitstellt;
einen Demodulator (302), der das empfangene digitale Fernsehsignal demoduliert;
einen Demultiplexer (303), der die Ereignisinformationstabelle aus dem demodulierten digitalen Fernsehsignal demultiplext;
einen Syntaxanalysator, der verwandte Ereignisinformationen aus der demultiplexten Ereignisinformationstabelle syntaktisch analysiert, wobei die verwandten Ereignisinformationen ein oder mehrere verwandte Ereignisse, die mit einem Ereignis, das gerade angezeigt wird, zusammenhängen, Typeninformationen, die einen Medientyp identifizieren, der den einen oder die mehreren verwandten Dienste überträgt, und Identifikationsinformationen, die gemäß den Typeninformationen einen Medienanbieter identifizieren, definieren;
eine Steuerung (306), die Informationen ausfiltert, die ein oder mehrere verwandte Ereignisse betreffen, die durch Medien übertragen werden, die von dem digitalen Fernsehen nicht unterstützt werden; und
eine Anzeige (305), die spezifische verwandte Ereignisinformationen anzeigt, die nicht ausgefiltert werden;
wobei die Steuerung ferner den Betrieb des Syntaxanalysators, des Speichers und der Anzeige steuert, und
wobei die Typeninformationen wenigstens einen Medientyp umfassen, der sich von dem Medium unterscheidet, das gegenwärtig von dem digitalen Fernsehempfänger verwendet wird, um das gegenwärtige Ereignis zu empfangen, und die Typeninformationen mindestens von einem terrestrischen, einem Kabel- und einem Internetprotokoll aufweist.

17. Empfänger nach Anspruch 16, wobei der Syntaxanalysator die verwandten Ereignisinformationen syntaktisch analysiert, die ferner wenigstens eines der folgenden aufweisen:
erste Informationen, die Beziehungen zwischen dem gegenwärtigen Ereignis und den verwandten Ereignissen definieren, zweite Informationen, die eine Dienstnummer des Dienstes zum Befördern der verwandten Ereignisse definieren, dritte Informationen, die eine Startzeit und eine Zeitdauer für jedes verwandte Ereignis definieren, und vierte Informationen, die anzeigen, ob die verwandten Ereignisinformationen sofort angezeigt werden sollen.

18. Empfänger nach Anspruch 16, wobei die Steuerung konfiguriert ist, um eine Dienstumschaltung gemäß einer Auswahl zu ermöglichen, die von einem Zuschauer oder den vierten Informationen getroffen wird.

19. Empfänger nach Anspruch 16, wobei die Steuerung konfiguriert ist, um einen Zeitschalter festzulegen, um wenigstens eine der angezeigten verwandten Ereignisinformationen aufzuzeichnen, wenn eine Anforderung von einem Zuschauer empfangen wird, und die Ereignisinformationstabelle in einer digitalen Videoausstrahlungsdienstinformation zu extrahieren.

20. Digitaler Fernsehempfänger, der aufweist:
einen Kanalwähler (301), der einen Kanal einstellt, um ein digitales Fernsehsignal zu empfangen, das eine Dienstbeschreibungstabelle umfasst, die Dienste beschreibt, die in einem bestimmten Transportstrom enthalten sind;
einen Demodulator (302), der das empfangene digitale Fernsehsignal demoduliert;
einen Demultiplexer (303), der die Dienstbeschreibungstabelle aus dem demodulierten digitalen Fernsehsignal demultiplext;
einen Syntaxanalysator, der verwandte Dienstinformationen aus der demultiplexten Dienstbeschreibungstabelle syntaktisch analysiert, wobei die verwandten Dienstinformationen verwandte Dienste, die mit einem Dienst, der gerade angezeigt wird, zusammenhängen, Typeninformationen, die einen Medientyp identifizieren, der den einen oder die mehreren verwandten Dienste überträgt, und Identifikationsinformationen, die gemäß den Typeninformationen einen Medienanbieter identifizieren, definieren;
eine Steuerung (306), die Informationen ausfiltert, die ein oder mehrere verwandte Dienste betreffen, die durch Medien übertragen werden, die von dem digitalen Fernsehen nicht unterstützt werden; und
eine Anzeige (305), die spezifische verwandte Dienstinformationen anzeigt, die nicht ausgefiltert werden;
wobei die Steuerung ferner den Betrieb des Syntaxanalysators, des Speichers und der Anzeige steuert, und
wobei die Typeninformationen wenigstens einen Medientyp umfassen, der sich von einem Medium unterscheidet, das gegenwärtig von dem digitalen Fernsehempfänger verwendet wird, um einen gegenwärtigen Dienst zu empfangen, und die Typeninformationen mindestens eines von einem terrestrischen, einem Kabel- und einem Internetprotokoll aufweist.

21. Empfänger nach Anspruch 20, wobei der Syntaxanalysator die verwandten Dienstinformationen syntaktisch analysiert, die ferner wenigstens eine der folgenden aufweisen:
erste Informationen, die Beziehungen zwischen dem gegenwärtigen Dienst und den verwandten Diensten definieren, zweite Informationen, die eine Dienstnummer der verwandten Dienste definieren, und dritte Informationen, die anzeigen, ob die verwandten Dienstinformationen sofort angezeigt werden sollen.

22. Empfänger nach Anspruch 20, wobei die Steuerung konfiguriert ist, um eine Dienstumschaltung gemäß einer Auswahl zu ermöglichen, die von einem Zuschauer oder der dritten Information getroffen wird.

23. Empfänger nach Anspruch 20, wobei die Steuerung konfiguriert ist, um einen Zeitschalter festzulegen, um weinen spezifischen Dienst aufzuzeichnen, der in den angezeigten verwandten Dienstinformationen angefordert wird, wenn eine Anforderung von einem Zuschauer empfangen wird, und die Dienstbeschreibungstabelle in einer digitalen Videoausstrahlungsdienstinformation zu extrahieren.

## Revendications

1. Procédé de traitement d'un signal de télévision numérique dans un récepteur de télévision numérique, le procédé comprenant les étapes consistant à :
recevoir (S401) un signal de télévision numérique comprenant un tableau d'informations d'événements fournissant des informations dans l'ordre chronologique en ce qui concerne un ou plusieurs événements contenus dans chaque service ;
démoduler le signal de télévision numérique reçu ;
démultiplexer (S402) le tableau d'informations d'événements à partir du signal de télévision numérique démodulé ;
analyser (S403) des informations d'événements liés à partir du tableau d'informations d'événements démultiplexé,
dans lequel les informations d'événements liés spécifient un ou plusieurs événements liés associés à un événement actuel qui est en cours d'affichage, et les informations d'événements liés comprennent des informations de type identifiant un type de support transmettant le ou les événements liés et des informations d'identification identifiant un fournisseur de support en fonction des informations de type ;
filtrer les informations qui concernent un ou plusieurs événements liés transmis à travers le support qui ne sont pas pris en charge par la télévision numérique ; et
afficher (S407) les informations d'événements liés qui ne sont pas filtrées,
dans lequel les informations de type comprennent au moins un type de support différent d'un support actuellement utilisé par le récepteur de télévision numérique pour recevoir un événement actuel, et les informations de type comprennent au moins l'un de terrestre, câble, et protocole Internet.

2. Procédé selon la revendication 1, dans lequel les informations d'événements liés comprennent en outre au moins l'une de :
une première information définissant des relations entre l'événement actuel et les événements liés, une deuxième information définissant un numéro de service du service pour porter les événements liés, et une troisième information définissant une heure de début et une durée pour chaque événement lié.

3. Procédé selon la revendication 2, dans lesquelles les informations d'événements liés comprennent en outre une quatrième information indiquant si les informations d'événements liés doivent être immédiatement affichées.

4. Procédé selon la revendication 2, dans lequel la première information identifie chaque événement lié comme étant au moins l'un d'un même événement, d'un événement retransmis, d'un ou plusieurs événements dans une même série, et d'un événement supplémentaire comprenant des informations supplémentaires liées à l'événement actuel.

5. Procédé selon la revendication 3, dans lequel les informations d'événements liés spécifiques sont configurées pour permettre une commutation de service en fonction d'une sélection effectuée par un spectateur ou de la quatrième information.

6. Procédé selon la revendication 1, comprenant en outre l'étape consistant à afficher un événement lié correspondant demandé à partir des informations d'événements liés spécifiques affichées lorsqu'une deuxième demande est reçue du spectateur.

7. Procédé selon la revendication 1, comprenant en outre l'étape consistant à régler une minuterie pour enregistrer au moins l'une des informations d'événements liés affichées lorsqu'une deuxième demande est reçue du spectateur.

8. Procédé selon la revendication 1, dans lequel le tableau d'informations d'événements est inclus dans un tableau d'informations de services de diffusion vidéo numérique.

9. Procédé de traitement d'un signal de télévision numérique dans un récepteur de télévision numérique, le procédé comprenant les étapes consistant à :
recevoir (S401) un signal de télévision numérique comprenant un tableau de description de services décrivant des services qui sont contenus dans un flux de transport particulier ;
démultiplexer (S402) le tableau de description de services à partir du signal de télévision numérique reçu ;
analyser (S403) des informations de services liés à partir du tableau de description de services démultiplexé,
dans lequel les informations de services liés spécifient un ou plusieurs services liés associés à un service actuel qui est en cours d'affichage, et les informations de services liés comprennent des informations de type identifiant un type de support transmettant le ou les services liés et des informations d'identification identifiant un fournisseur de support en fonction des informations de type ;
filtrer les informations qui concernent un ou plusieurs services liés transmis à travers le support qui ne sont pas pris en charge par la télévision numérique ; et
afficher (S407) les informations de services liés qui ne sont pas filtrées,
dans lequel les informations de type comprennent au moins un type de support différent d'un support actuellement utilisé par le récepteur de télévision numérique pour recevoir un service actuel, et les informations de type comprennent au moins l'un de terrestre, câble, et protocole Internet.

10. Procédé selon la revendication 9, dans lequel les informations de services liés comprennent en outre au moins l'une de :
une première information définissant des relations entre le service actuel et les services liés, une deuxième information définissant un numéro de service des services liés, et une troisième information indiquant si les informations de services liés doivent être immédiatement affichées.

11. Procédé selon la revendication 10, comprenant en outre l'étape consistant à régler une minuterie pour enregistrer un service spécifique demandé dans les informations de services liés affichées lorsqu'une demande est reçue d'un spectateur.

12. Procédé selon la revendication 10, dans lequel la première information identifie chaque service lié comme étant au moins l'un d'un service de retransmission, d'un service de remplacement remplaçant le service actuel, et d'un service de thème spécial.

13. Procédé selon la revendication 9, dans lequel les informations de services liés spécifiques sont configurées pour permettre une commutation de services en fonction d'une sélection effectuée par un spectateur ou de la troisième information.

14. Procédé selon la revendication 13, comprenant en outre l'étape consistant à afficher un service lié correspondant demandé à partir des informations de services liés affichées lorsqu'une deuxième demande est reçue du spectateur.

15. Procédé selon la revendication 9, dans lequel le tableau de description de services est inclus dans des informations de services de diffusion vidéo numérique.

16. Récepteur de télévision numérique comprenant :
un tuner (301) se réglant sur un canal pour recevoir un signal de télévision numérique comprenant un tableau d'informations d'événements fournissant des informations dans l'ordre chronologique en ce qui concerne un ou plusieurs événements contenus dans chaque service ;
un démodulateur (302) pour démoduler le signal de télévision numérique reçu ;
un démultiplexeur (303) pour démultiplexer le tableau d'informations d'événements à partir du signal de télévision numérique démodulé ;
un analyseur pour analyser des informations d'événements liés à partir du tableau d'informations d'événements démultiplexé, les informations d'événements liés définissant un ou plusieurs événements liés associés à un événement qui est en cours d'affichage, des informations de type identifiant un type de support transmettant le ou
les événements liés et des informations d'identification identifiant un fournisseur de support en fonction des informations de type ;
un contrôleur (306) pour filtrer les informations qui concernent un ou plusieurs événements liés transmis à travers le support qui ne sont pas pris en charge par la télévision numérique ; et
un affichage (305) pour afficher les informations d'événements liés spécifiques qui ne sont pas filtrées ;
dans lequel le contrôleur commande en outre le fonctionnement de l'analyseur, du stockage et de l'affichage, et
dans lequel les informations de type comprennent au moins un type de support différent d'un support actuellement utilisé par le récepteur de télévision numérique pour recevoir un événement actuel, et les informations de type comprennent au moins l'un de terrestre, câble, et protocole Internet.

17. Récepteur selon la revendication 16, dans lequel l'analyseur analyse les informations d'événements liés comprenant en outre au moins l'une de :
une première information définissant des relations entre l'événement actuel et les événements liés, une deuxième information définissant un numéro de service du service pour porter les événements liés, une troisième information définissant une heure de début et une durée pour chaque événement lié et une quatrième information indiquant si les informations d'événements liés doivent être immédiatement affichées.

18. Récepteur selon la revendication 16, dans lequel le contrôleur est configuré pour permettre une commutation de service en fonction d'une sélection effectuée par un spectateur ou de la quatrième information.

19. Récepteur selon la revendication 16, dans lequel le contrôleur est configuré pour régler une minuterie pour enregistrer au moins l'une des informations d'événements liés affichées lorsqu'une demande est reçue d'un spectateur et extraire le tableau d'informations d'événements d'un tableau d'informations de services de diffusion vidéo numérique.

20. Récepteur de télévision numérique comprenant :
un tuner (301) se réglant sur un canal pour recevoir un signal de télévision numérique comprenant un tableau de description de services décrivant des services qui sont contenus dans un flux de transport particulier ;
un démodulateur (302) pour démoduler le signal de télévision numérique reçu ;
un démultiplexeur (303) pour démultiplexer le tableau de description de services à partir du signal de télévision numérique démodulé ;
un analyseur pour analyser des informations de services liés à partir du tableau de description de services démultiplexé, les informations de services liés définissant des services liés associés à un service actuel qui est en cours d'affichage, des informations de type identifiant un type de support transmettant le ou les services liés et des informations d'identification identifiant un fournisseur de support en fonction des informations de type ;
un contrôleur (306) pour filtrer les informations qui concernent un ou plusieurs services liés transmis à travers le support qui ne sont pas pris en charge par la télévision numérique ; et
un affichage (305) pour afficher les informations de services liés spécifiques qui ne sont pas filtrées,
dans lequel le contrôleur commande en outre le fonctionnement de l'analyseur, du stockage et de l'affichage, et
dans lequel les informations de type comprennent au moins un type de support différent d'un support actuellement utilisé par le récepteur de télévision numérique pour recevoir un service actuel, et les informations de type comprennent au moins l'un de terrestre, câble, et protocole Internet.

21. Récepteur selon la revendication 20, dans lequel l'analyseur analyse les informations de services liés comprenant en outre au moins l'une de :
une première information définissant des relations entre le service actuel et les services liés, une deuxième information définissant un numéro de service des services liés, et une troisième information indiquant si les informations de services liés doivent être immédiatement affichées.

22. Récepteur selon la revendication 20, dans lequel le contrôleur est configuré pour permettre une commutation de services en fonction d'une sélection effectuée par un spectateur ou de la troisième information.

23. Récepteur selon la revendication 20, dans lequel le contrôleur est configuré pour régler une minuterie pour enregistrer un service spécifique demandé dans les informations de services liés affichées lorsqu'une demande est reçue d'un spectateur et extraire le tableau de description de services dans une information de services de diffusion de vidéo numérique.
